# EUROPÄISCHE PATENTSCHRIFT

(11) **EP 4 396 799 B1**
(45) Veröffentlichungstag und Bekanntmachung des Hinweises auf die Patenterteilung: **27.05.2026**
(21) Anmeldenummer: 22801099.7
(22) Anmeldetag: 10.10.2022
(51) Int. Cl.: G06N 3/045, G06N 3/09, G06N 3/0442, G08G 1/00, B60W 60/00, B60W 40/04

(54) **VERFAHREN ZUM AUTOMATISIERTEN BETRIEB EINES FAHRZEUGS**
METHOD FOR THE AUTOMATED OPERATION OF A VEHICLE
PROCÉDÉ DE FONCTIONNEMENT AUTOMATISÉ D'UN VÉHICULE

(30) Priorität: 12.11.2021 DE 102021005625
(43) Veröffentlichungstag der Anmeldung: 10.07.2024
(73) Patentinhaber: Mercedes-Benz Group AG, 70372 Stuttgart (DE)
(72) Erfinder: SCHMIDT, Julian, 78256 Steißlingen (DE)
(74) Vertreter: Novagraaf Group
(86) Internationale Anmeldenummer: PCT/EP2022/078155
(87) Internationale Veröffentlichungsnummer: WO 2023/083539

(56) Entgegenhaltungen:
- CARRASCO S ET AL: "SCOUT: Socially-COnsistent and UndersTandable Graph Attention Network for Trajectory Prediction of Vehicles and VRUs", 2021 IEEE INTELLIGENT VEHICLES SYMPOSIUM (IV), IEEE, 11 July 2021 (2021-07-11), pages 1501 - 1508, XP034006319, DOI: 10.1109/IV48863.2021.9575874

## Beschreibung

Die Erfindung betrifft ein Verfahren zum automatisierten Betrieb eines Ego-Fahrzeugs gemäß dem Oberbegriff des Patentanspruchs 1.

Aus dem Stand der Technik sind allgemein automatisiert, beispielsweise hochautomatisiert oder autonom, fahrende Fahrzeuge bekannt. Um Sicherheitsanforderungen, welche an solche Fahrzeuge gestellt werden, erfüllen zu können, ist eine Prädiktion einer zukünftigen Bewegung von am Verkehr teilnehmenden Fahrzeugen benötigt. Dies wird als Trajektorienprädiktion bezeichnet. Dabei sind Ansätze bekannt, die auf Methoden des maschinellen Lernens basieren.

Der Begriff "Szene" wird im Folgenden für eine mittels einer Umgebungserfassung eines Fahrzeugs erfasste Umgebungssituation verwendet, in welcher zumindest ein weiteres Fahrzeug vorhanden sein kann. Zur Beschreibung einer solchen Szene können zusätzlich auch Kartendaten einer digitalen Straßenkarte verwendet werden.

Ansätze zur Trajektorienprädiktion, die im Gegensatz zu rasterisierenden Ansätzen, wie beispielsweise einem CNN-basierten Ansatz (CNN: Convolutional Neural Network), keine Rasterisierung einer Szene durchführen, basieren auf so genannten Graph Neural Networks (kurz: GNNs) oder einer Self-Attention, im Folgenden auch als aufmerksamkeitsbasierte Ansätze bezeichnet. Um soziale Interaktionen zwischen Fahrzeugen zu modellieren, wird bei diesen Ansätzen ein Graph gebildet. Knoten des Graphen sind Encodings bzw. Kodierungen der Fahrzeuge in der Szene. Die Knoten sind über Kanten miteinander verbunden.

Es existieren Ansätze, welche alle Fahrzeuge in einer Szene mit Kanten verbinden, so dass vollständige Graphen, auch als fully-connected Graphen bezeichnet, gebildet werden. Dies bedeutet, dass alle Fahrzeuge in die Trajektorienprädiktion des zu prädizierenden Fahrzeugs einfließen bzw. als relevant ausgewählt werden.

Andere Ansätze bilden die Kanten des Graphen abhängig von einer Distanz zwischen den einzelnen Fahrzeugen. Somit wird eine distanzbasierte Vorauswahl der Fahrzeuge, welche für die Prädiktion des zu prädizierenden Fahrzeugs betrachtet werden, getroffen.

In "Y. Ma, et al.: TrafficPredict: Trajectory Prediction for Heterogeneous Traffic-Agents; In The Thirty-Third AAAI Conference on Artificial Intelligence, AAAI 2019, 2019, Seiten 6120 bis 6127, doi: 10.1609/aaai.v33i01.33016120" ist ein Verfahren zur Vorhersage zukünftiger Trajektorien von Verkehrsteilnehmern zur Navigation eines automatisiert fahrenden Fahrzeugs beschrieben. Dabei wird ein auf einem so genannten langen Kurzzeitgedächtnis (englisch: Long Short-Term Memory, kurz: LSTM) basierender Echtzeit-Verkehrsvorhersagealgorithmus verwendet. Dieser umfasst eine Instanzebene, um Bewegungen und Interaktionen von Instanzen zu lernen. Weiterhin umfasst der Echtzeit-Verkehrsvorhersagealgorithmus eine Kategorieebene, um Ähnlichkeiten von Instanzen desselben Typs zu lernen und so die Vorhersage zu verfeinern.

In S. Carrasco et al.:SCOUT: "Socially-COnsistent and UndersTandable Graph Attention Network for Trajectory Prediction of Vehicles and VRUs", 2021 IEEE Intelligent Vehicles Symposium (IV), Nagoya, Japan, 2021, pp. 1501-1508, doi: 10.1109/IV48863.2021.9575874, ist ein Verfahren zur Modellierung von Interaktionen von Verkehrsteilnehmern in einer Szene beschrieben. Dabei ist vorgesehen, dass ein aufmerksamkeitsbasiertes neuronales Graphennetz (Attention-based Graph Neuronal Network) eine generische Repräsentation der Szene als Graph verwendet, um Interaktionen zu modellieren und um sozial konsistente Trajektorien von Fahrzeugen und gefährdeten Verkehrsteilnehmern unter gemischten Verkehrsbedingungen vorherzusagen.

Der Erfindung liegt die Aufgabe zu Grunde, ein neuartiges Verfahren zum automatisierten Betrieb eines Ego-Fahrzeugs anzugeben.

Die Aufgabe wird erfindungsgemäß gelöst durch ein Verfahren zum automatisierten Betrieb eines Ego-Fahrzeugs, welches die im Anspruch 1 angegebenen Merkmale aufweist.

Vorteilhafte Ausgestaltungen der Erfindung sind Gegenstand der Unteransprüche.

Das erfindungsgemäße Verfahren zum automatisierten Betrieb eines Ego-Fahrzeugs basiert auf einer Trajektorienprädiktion, die zur Prädiktion von Trajektorien von Fahrzeugen in einer Umgebung eines Ego-Fahrzeugs durchgeführt wird. Die Trajektorienprädiktion wird dabei mittels einer Vorrichtung zur Trajektorienprädiktion durchgeführt, in der ein lernbasierter Trajektorienprädiktionsalgorithmus ausgeführt wird und in der mittels eines maschinell trainierten aufmerksamkeitsbasierten Interaktionsalgorithmus Interaktionsgrade zwischen den Fahrzeugen ermittelt werden. Das heißt, die Interaktionsgrade werden sowohl für die Interaktionen zwischen den Fahrzeugen aus der Umgebung des Ego-Fahrzeugs untereinander als auch für die Interaktionen zwischen dem Ego-Fahrzeug und den Fahrzeugen aus seiner Umgebung ermittelt. Die Interaktionsgrade werden dabei als Attention-Gewichte einer Self-Attention des aufmerksamkeitsbasierten Interaktionsalgorithmus gebildet. Mittels des Interaktionsalgorithmus werden weiterhin einzelne Fahrzeuge aus der Menge der in der Umgebung des Ego-Fahrzeugs befindlichen Fahrzeuge als relevant für die Trajektorienprädiktion identifiziert und für diese ausgewählt, wenn deren jeweiliger Interaktionsgrad mit zumindest einem der Fahrzeuge, dessen Trajektorie prädiziert werden soll, einen vorgegebenen Grenzwert überschreitet. In einem darauffolgenden Lernschritt wird der Trajektorienprädiktionsalgorithmus mit den als relevant für die Trajektorienprädiktion ausgewählten Fahrzeugen, insbesondere ausschließlich mit den als relevant für die Trajektorienprädiktion ausgewählten Fahrzeugen, trainiert und die mittels des Trajektorienprädiktionsalgorithmus ausgeführte Trajektorienprädiktion wird für die als relevant für die Trajektorienprädiktion ausgewählten Fahrzeuge, insbesondere ausschließlich für die als relevant für die Trajektorienprädiktion ausgewählten Fahrzeuge, durchgeführt.

Insbesondere bildet das vorliegende Verfahren dabei ein so genanntes Zweischrittverfahren zur Trajektorienprädiktion von Fahrzeugen, in welchem zunächst eine interaktionsbasierte Fahrzeugvorauswahl getroffen wird und anschließend eine Trajektorienprädiktion mit einer reduzierten Anzahl von Fahrzeugen durchgeführt wird.

Lernbasierte Trajektorienprädiktionsalgorithmen inkludieren beispielsweise Kartendaten einer hochaufgelösten digitalen Straßenkarte und basieren häufig auf einer Graphenstruktur, in welchen die in der Umgebung des Ego-Fahrzeugs erfassten weiteren Fahrzeuge typischerweise Knoten in einem Graphen bilden. Somit skaliert eine Komplexität solcher Trajektorienprädiktionsalgorithmen mit der Anzahl der Fahrzeuge in einer Szene. Dies erzeugt eine starke Laufzeitabhängigkeit, insbesondere dann, wenn für alle Fahrzeuge in der Szene auch Karteninformationen abgefragt werden müssen. Zusätzlich erschweren vielen irrelevante Fahrzeuge in der Szene einen Trainingsprozess des Trajektorienprädiktionsalgorithmus und führen beispielsweise zu ungenügenden Prädiktionsergebnissen und einem ungenügenden Konvergenzverhalten. Beispielsweise wirken sich weit entfernte Fahrzeuge nicht messbar auf die Trajektorienprädiktion des zu prädizierenden Fahrzeugs aus. Eine Auswahl aller Agenten bzw. Fahrzeuge in einer Szene führt somit dazu, dass der Trajektorienprädiktionsalgorithmus selbstständig erkennen muss, welche umliegenden Fahrzeuge für die Prädiktion überhaupt einen informativen Mehrwert haben und welche nicht.

Mittels des vorliegenden Verfahrens wird dagegen mittels des Interaktionsalgorithmus eine initiale Vorauswahl relevanter Fahrzeuge für den Trajektorienprädiktionsalgorithmus realisiert. Zur Ermittlung der Interaktionen sind in besonders vorteilhafter Weise Kartendaten einer hochaufgelösten digitalen Straßenkarte nicht erforderlich, so dass sich der Interaktionsalgorithmus durch eine geringe Komplexität auszeichnet. Somit kann insbesondere auch für komplexe und gegebenenfalls kartenbasierte Trajektorienprädiktionsalgorithmen durch eine limitierte Auswahl von Fahrzeugen eine Komplexität verringert werden. Bei graphenbasierten Ansätzen können dabei Knoten in einem Graph reduziert werden, so dass sich auch eine Laufzeit reduziert.

Gegenüber einer distanzbasierten Auswahl erfolgt die Vorauswahl der relevanten Fahrzeuge nicht nach ihrer Distanz, sondern nach ihrem Interaktionsgrad mit dem zu prädizierenden Fahrzeug. Somit kann beispielsweise berücksichtigt werden, dass eine zukünftige Trajektorie eines Fahrzeugs. stark von einem in einem bestimmten Abstand vorausfahrenden Fahrzeugs beeinflusst wird. Eine Beeinflussung durch ein im gleichen hinterherfahrenden Fahrzeug findet dagegen kaum statt.

Somit kann mittels des vorliegenden Verfahrens Laufzeitverbesserungen des finalen Trajektorienprädiktionsalgorithmus im Vergleich zu Ansätzen ohne Vorauswahl erreicht werden. Auch kann eine Trainingszeit des finalen Trajektorienprädiktionsalgorithmus durch Vorauswahl der relevanten Fahrzeuge verringert werden. Weiterhin kann eine Güteverbesserung der finalen Trajektorienprädiktion im Vergleich zu Ansätzen ohne Vorauswahl und im Vergleich zu Ansätzen mit distanzbasierter Vorauswahl realisiert werden. Auch kann ein Indikator für Interaktionen zwischen den Fahrzeugen zusätzlich für andere Aufgaben genutzt werden, beispielsweise zur gezielten Beeinflussung anderer Verkehrsteilnehmer.

Aufgrund der Vorauswahl und somit der Reduzierung einer Anzahl der Fahrzeuge können auch Trajektorienprädiktionsalgorithmen mit großer Komplexität bei geringem Verarbeitungsaufwand und geringer Laufzeit verwendet werden. Der hierbei verwendete Trajektorienprädiktionsalgorithmus ist beispielsweise gemäß
- C. Tang und R. R. Salakhutdinov: "Multiple Futures Prediction"; In: Advances in Neural Information Processing Systems, 2019, vol. 32,
- T. Salzmann, B. Ivanovic, P. Chakravarty und M. Pavone: "Trajectron++: Dynamically-Feasible Trajectory Forecasting with Heterogeneous Data"; In: Computer Vision - ECCV 2020, Cham, 2020, Seiten 683 bis 700,
- M. Liang et al.: "Learning Lane Graph Representations for Motion Forecasting"; In: Computer Vision - ECCV 2020, Cham, 2020, Seiten 541 bis 556,
- S. Khandelwal, W. Qi, J. Singh, A. Hartnett und D. Ramanan: "What-If Motion Prediction for Autonomous Driving" 2020 und/oder
- Y. Ma, X. Zhu, S. Zhang, R. Yang, W. Wang und D. Manocha: "TrafficPredict: Trajectory Prediction for Heterogeneous Traffic-Agents"; In The Thirty-Third AAAI Conference on Artificial Intelligence, AAAI 2019, 2019, Seiten 6120 bis 6127, doi: 10.1609/aaai.v33i01.33016120
ausgebildet.

In einer möglichen Ausgestaltung des Verfahrens werden die Interaktionsgrade zwischen den Fahrzeugen paarweise für jeweils zwei Fahrzeuge ermittelt.

In einer weiteren möglichen Ausgestaltung des Verfahrens werden in dem maschinellen Trainieren des Interaktionsalgorithmus paarweise Abhängigkeiten zwischen Fahrzeugen gelernt und zur Bildung von Interaktionsgraden wird mittels des Interaktionsalgorithmus paarweise gewichtet, wie groß eine gegenseitige Beeinflussung der Fahrzeuge ist. Dies ermöglicht im späteren Betrieb des Interaktionsalgorithmus eine einfache und zuverlässige Ermittlung der Interaktionen zwischen Fahrzeugen und Bestimmung der Interaktionsgrade.

In einer weiteren möglichen Ausgestaltung des Verfahrens wird in dem maschinellen Trainieren des Interaktionsalgorithmus eine Trajektorienprädiktion generiert, welche zum Training des Interaktionsalgorithmus verwendet wird. Dies ermöglicht ein effektives Training des Interaktionsalgorithmus sowie eine besonders große Genauigkeit und Zuverlässigkeit des Interaktionsalgorithmus bei der Ermittlung der Interaktionsgrade.

In einer weiteren möglichen Ausgestaltung des Verfahrens wird die generierte Trajektorienprädiktion in dem maschinellen Trainieren des Interaktionsalgorithmus zum implizierten Lernen der Interaktionsgrade verwendet.

In einer weiteren möglichen Ausgestaltung des Verfahrens werden während eines Betriebs des maschinell trainierten Interaktionsalgorithmus alle Fahrzeuge in einer Szene mit einem langen Kurzzeitgedächtnis, auch als Long short-term memory bezeichnet, kodiert, wobei bei dem Kodieren Knoten eines vollständigen Graphen, auch als fully-connected Graph bezeichnet, gebildet werden. Die Verwendung des langen Kurzzeitgedächtnisses ermöglicht dabei eine Erinnerung an frühere Erfahrungen und somit ein Kurzzeitgedächtnis, welches lange anhält, da ein prinzipielles Verhalten des Graphen in entsprechenden Gewichten kodiert ist. Mittels des vollständigen Graphen können dabei Beziehungen zwischen den Fahrzeugen vollständig abgebildet werden.

In einer weiteren möglichen Ausgestaltung des Verfahrens werde die Knoten über Kanten miteinander verbunden, wobei ein Abstand zwischen den Fahrzeugen als Kantenmerkmal verwendet wird. Somit kann auch ein Abstand zwischen den Fahrzeugen bei der Ermittlung des jeweiligen Interaktionsgrads berücksichtigt werden.

In einer weiteren möglichen Ausgestaltung des Verfahrens werden mittels des Trajektorienprädiktionsalgorithmus Kartendaten einer hochaufgelösten digitalen Straßenkarte zur Trajektorienprädiktion verwendet. Die Verwendung einer solchen hochaufgelösten digitalen Straßenkarte ermöglicht eine Speicherung eines Standorts und einer vergangenen Bewegung von erfassten und lokalisierten Fahrzeugen in der Szene. Die Straßenkarte kann dabei Straßentopologien, Verkehrszeichen, Verkehrssignale (beispielsweise Signale einer Lichtsignalanlage), Fußgängerüberwege und weitere Informationen beinhalten und ermöglicht somit eine besonders genaue und zuverlässige Trajektorienprädiktion.

In dem erfindungsgemäßen Verfahren zum automatisierten Betrieb eines Ego-Fahrzeugs werden in einem Verfahren zur Trajektorienprädiktion von Fahrzeugen in einer Umgebung eines Ego-Fahrzeugs gemäß der vorherigen Beschreibung Trajektorien von Fahrzeugen in einer Umgebung eines Ego-Fahrzeugs prädiziert und die prädizierten Trajektorien in dem automatisierten Betrieb des Fahrzeugs bei einer automatisierten Quer- und/oder Längssteuerung des Ego-Fahrzeugs berücksichtigt. Durch die Verwendung des Verfahrens zur Trajektorienprädiktion von Fahrzeugen kann ein besonders zuverlässiger und sicherer automatisierter, beispielsweise hochautomatisierter oder autonomer, Betrieb des Ego-Fahrzeugs realisiert werden.

Ausführungsbeispiele der Erfindung werden im Folgenden anhand von Zeichnungen näher erläutert.

Dabei zeigen:
- Fig. 1: schematisch ein Blockschaltbild einer Vorrichtung zur Trajektorienprädiktion,
- Fig. 2: schematisch ein Blockschaltbild einer Vorrichtung zur Ausbildung eines Interaktionsalgorithmus,
- Fig. 3: schematisch eine Abweichung eines durchschnittlichen Entfernungsfehlers für zwei Trajektorienprädiktionen von einem Ergebnis eines finalen Trajektorienprädiktionsalgorithmus für unterschiedliche Anzahlen von Fahrzeugen in einer Szene,
- Fig. 4: schematisch eine Abweichung eines finalen Entfernungsfehlers für zwei Trajektorienprädiktionen von einem Ergebnis eines finalen Trajektorienprädiktionsalgorithmus für unterschiedliche Anzahlen von Fahrzeugen in einer Szene und
- Fig. 5: schematisch eine Abweichung einer Fehlerklassifikationsrate für zwei Trajektorienprädiktionen von einem Ergebnis eines finalen Trajektorienprädiktionsalgorithmus für unterschiedliche Anzahlen von Fahrzeugen in einer Szene.

Einander entsprechende Teile sind in allen Figuren mit den gleichen Bezugszeichen versehen.

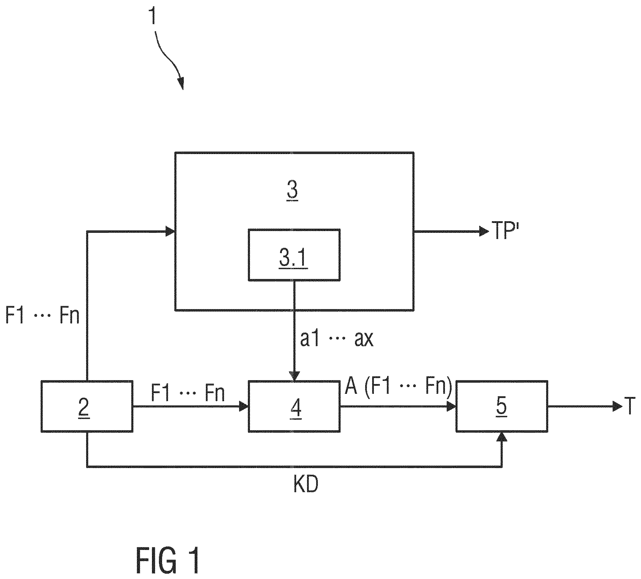

In Figur 1 ist ein Blockschaltbild eines möglichen Ausführungsbeispiels einer Vorrichtung 1 zur Trajektorienprädiktion von Fahrzeugen F1 bis Fn in einer Umgebung eines Ego-Fahrzeugs dargestellt.

In einem Datenspeicher 2 sind Daten hinterlegt, welche eine Szene in der Umgebung des Ego-Fahrzeugs beschreiben. Diese Daten umfassen mittels einer nicht näher dargestellten Umgebungserfassungssensorik des Ego-Fahrzeugs, anderer Fahrzeuge und/oder einer Verkehrsinfrastruktur erfasste Umgebungsdaten und Kartendaten KD einer hochaufgelösten digitalen Straßenkarte. Die Umgebungsdaten umfassen dabei insbesondere auch Daten über die Fahrzeuge F1 bis Fn.

Um einen Verarbeitungsaufwand bei der Trajektorienprädiktion von Fahrzeugen F1 bis Fn in der Umgebung des Ego-Fahrzeugs zu minimieren, ist vorgesehen, dass initial Interaktionen zwischen dem Fahrzeug F1 bis Fn, dessen Trajektorie bestimmt werden soll, und allen anderen Fahrzeugen F1 bis Fn in der Szene, also auch dem Ego-Fahrzeug, bestimmt werden.

Diese Bestimmung erfolgt mittels eines maschinell trainierten aufmerksamkeitsbasierten Interaktionsalgorithmus 3, welcher Interaktionsgrade I1 bis Im zwischen den Fahrzeugen F1 bis Fn, insbesondere zwischen einem Fahrzeug F1 bis Fn, dessen Trajektorie T prädiziert werden soll, und den in dessen Umgebung befindlichen Fahrzeugen F1 bis Fn ermittelt. Die Ermittlung der Interaktionsgrade I1 bis Im zwischen den Fahrzeugen F1 bis Fn erfolgt dabei paarweise für jeweils zwei Fahrzeuge F1 bis Fn.

Dieser Interaktionsalgorithmus 3 zeichnet sich durch eine geringe Komplexität mit kurzer Laufzeit aus und ist lediglich auf Interaktionen zwischen den Fahrzeugen F1 bis Fn fokussiert. Kartendaten KD einer hochauflösenden digitalen Straßenkarte sind für die Bestimmung der Interaktionsgrade I1 bis Im nicht erforderlich. Die Interaktionsgrade I1 bis Im stellen dabei so genannte Attention-Gewichte dar, welche mittels einer so genannten Self-Attention 3.1 des aufmerksamkeitsbasierten Interaktionsalgorithmus 3 gebildet werden.

Insbesondere werden bei der Ermittlung der Interaktionsgrade I1 bis Im auch Trajektorienprädiktionen TP' generiert, welche zum Training des Interaktionsalgorithmus 3 verwendet werden. Dabei werden die Trajektorienprädiktionen TP' in dem maschinellen Trainieren des Interaktionsalgorithmus 3 beispielsweise zum implizierten Lernen der Interaktionsgrade I1 bis Im verwendet.

Der jeweilige Interaktionsgrad I1 bis Im kann allerdings nicht explizit aus Daten gelernt werden, da er nicht "labelbar" ist. Dementsprechend wird der aufmerksamkeitsbasierte Interaktionsalgorithmus 3 verwendet, welcher implizit die Interaktionsgrade I1 bis Im zwischen den Fahrzeugen F1 bis Fn lernt. Das Trainingsziel, also die zu prädizierende Trajektorie T, ist dagegen "labelbar". Gelernt werden dennoch implizit die Interaktionen zwischen den Fahrzeugen F1 bis Fn.

Der Interaktionsalgorithmus 3 lernt dabei, insbesondere paarweise Abhängigkeiten zwischen einzelnen Fahrzeugen F1 bis Fn zu nutzen, um die Interaktionsgrade I1 bis Im zu ermitteln. Das heißt, es wird ein Lernen von paarweisen Abhängigkeiten zwischen den Fahrzeugen F1 bis Fn durchgeführt. Dabei "gewichtet" ein genutzter Attention-Mechanismus jeweils paarweise, wie stark sich Fahrzeuge F1 bis Fn gegenseitig beeinflussen. Die dabei genutzten Attention-Gewichte weisen beispielsweise Werte im Bereich von 0,0 bis 1,0 auf. Somit kann über eine Grundgesamtheit eines Datensatzes gelernt werden, wie wichtig in einer Sequenz bzw. Szene jeweils umliegende Fahrzeuge F1 bis Fn für die Prädiktion einer Trajektorie T eines ausgewählten Fahrzeugs F1 bis Fn und/oder Ego-Fahrzeugs sind.

Nach einem Abschluss des Trainings des Interaktionsalgorithmus 3 wird dieser insbesondere in einem so genannten Forward-Pass verwendet, wobei eine dann mittels des Interaktionsalgorithmus 3 prädizierte Trajektorie eine untergeordnete Rolle spielt. Vielmehr werden nun die die Interaktionsgrade I1 bis Im bildenden Attention-Gewichte des zu prädizierenden Fahrzeugs F1 bis Fn abgegriffen. Diese geben für jedes andere Fahrzeug F1 bis Fn in der Sequenz an, wie wichtig dieses für die Prädiktion des ausgewählten Fahrzeugs F1 bis Fn und/oder des Ego-Fahrzeugs ist Auf Basis des jeweils ermittelten Interaktionsgrades I1 bis Im wird mittels einer Auswahleinheit 4 eine Fahrzeugvorauswahl A(F1 bis Fn) getroffen. Das heißt, es werden einzelne Fahrzeuge F1 bis Fn aus der Menge der in der Umgebung des Ego-Fahrzeugs befindlichen Fahrzeuge F1 bis Fn als relevant für die Trajektorienprädiktion identifiziert und für diese ausgewählt, wenn deren jeweiliger Interaktionsgrad I1 bis Im mit den anderen Fahrzeugen F1 bis Fn einen vorgegebenen Grenzwert überschreitet. Hierbei wird für jedes Fahrzeug F1 bis Fn, dessen Trajektorie T prädiziert werden soll, eine individuelle Auswahl relevanter Fahrzeuge F1 bis Fn getroffen. Dies ist möglich, weil die Interaktionsgrade I1 bis Im paarweise gebildet werden. Beispielsweise werden alle Fahrzeuge F1 bis Fn ausgewählt, welche ein Attention-Gewicht von mehr als 0,3 aufweisen. In einem weiteren, nicht beanspruchten Ausführungsbeispiel wird nur eine bestimmte Anzahl von Fahrzeugen F1 bis Fn ausgewählt, welche die höchsten Attention-Gewichte aufweisen.

Erst wenn die Fahrzeugvorauswahl A(F1 bis Fn) getroffen wurde, wird ein beliebig komplexer Trajektorienprädiktionsalgorithmus 5 verwendet. Dieser verwendet auch Kartendaten KD einer hochauflösenden digitalen Straßenkarte und prädiziert anhand der vorausgewählten Fahrzeuge F1 bis Fn und der Kartendaten KD final eine Trajektorie T für zumindest eines der Fahrzeuge F1 bis Fn in der Umgebung des Ego-Fahrzeugs.

Sowohl ein Training des Trajektorienprädiktionsalgorithmus 5 als ein Betrieb desselben in einem automatisiert betreibbaren Ego-Fahrzeug mittels dieser final prädizierten Trajektorien T wird lediglich auf der reduzierten Fahrzeugvorauswahl A(F1 bis Fn) interagierender Fahrzeuge F1 bis Fn durchgeführt. Die Fahrzeugvorauswahl A(F1 bis Fn) ermöglicht es dem finalen Trajektorienprädiktionsalgorithmus 5, sich nur auf relevante bzw. interagierende Fahrzeuge F1 bis Fn zu fokussieren und erleichtert den datengetriebenen Lernprozess, insbesondere aufgrund besserer Konvergenz. Verwendet der finale Trajektorienprädiktionsalgorithmus 5 zusätzlich Kartendaten KD aus der digitalen Straßenkarte, ist auch dieser Prozess erleichtert. Grund hierfür ist, dass so genannte "Queries" aus der Straßenkarte, beispielsweise ein Abstand zum nächsten Stoppunkt oder eine zulässige Maximalgeschwindigkeit, zeittechnisch sehr aufwendig sein können und eine Vorauswahl der relevanten Fahrzeuge F1 bis Fn die Anzahl der "Queries" stark verringern kann.

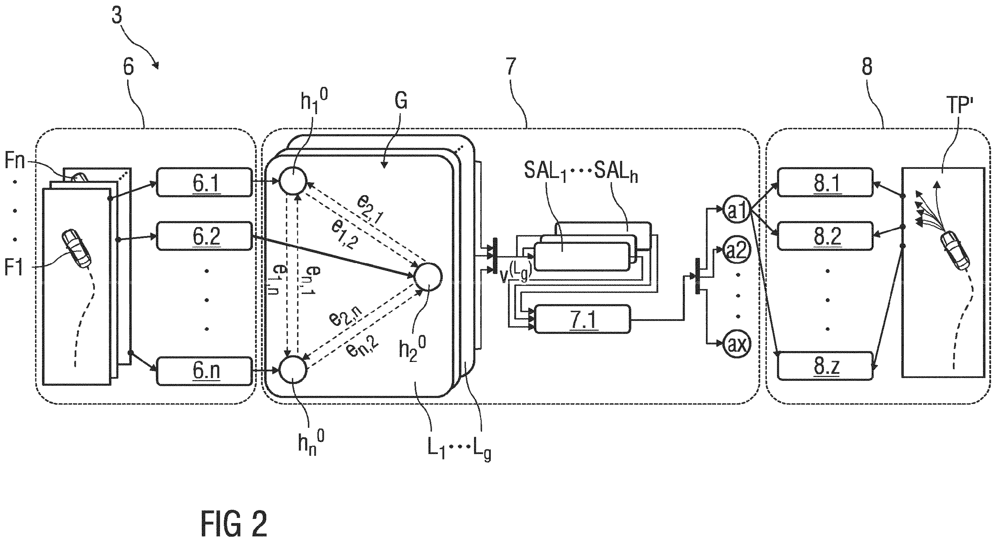

Figur 2 zeigt ein Blockschaltbild eines möglichen Ausführungsbeispiels einer Vorrichtung zur Ausbildung eines Interaktionsalgorithmus 3 gemäß Figur 1. Der Interaktionsalgorithmus 3 ist dabei als implementierter attention-basierter Trajektorienprädiktionsalgorithmus ausgebildet. In nicht näher dargestellter Weise sind auch andere Ausbildungen des Interaktionsalgorithmus 3 möglich, solange diese aufmerksamkeitsbasiert bzw. attention-basiert mittels einer Self-Attention den Interaktionsgrad I1 bis Im ermitteln.

In einem Input-Encoder 6 werden alle Fahrzeuge F1 bis Fn mittels so genannten LSTM-Encodern 6.1 bis 6.n mit einem langen Kurzzeitgedächtnis kodiert, wobei bei dem Kodieren Knoten h₁⁰ bis hₙ⁰ eines vollständigen Graphen G gebildet werden kodiert. Das heißt, die entstehenden Encodings bilden Knoten h₁⁰ bis hₙ⁰ in einem so genannten fully-connected Graphen G. Die Knoten h₁⁰ bis hₙ⁰ sind dabei über Kanten e_{1,2}, e_{1,n}, e_{2,1}, e_{2,n}, e_{n,1}, e_{n,2} miteinander verbunden. Ein Abstand zwischen den Fahrzeugen F1 bis Fn wird als zusätzliches Kantenmerkmal, das heißt zur Bildung der Kanten e_{1,2}, e_{1,n}, e_{2,1}, e_{2,n}, e_{n,1}, e_{n,2} verwendet.

Der Graph G wird dabei in einem Interaktionsmodul 7, welches einen Kern des Interaktionsalgorithmus 3 bildet, in mehreren Layern L₁ bis L_{g} gebildet. Weiterhin umfasst das Interaktionsmodul für die Methode erforderliche so genannte parallele Self-Attention-Heads SAL₁ bis SALₕ. Mittels dieser wird eine so genannte Multi-Head-Self-Attention gemäß Ashish Vaswani et. al: "Attention Is All You Need" (https://arxiv.org/abs/1706.03762) durchgeführt.

Den Self-Attention-Heads SAL₁ bis SALₕ werden mittels der Layern L₁ bis L_{g} ermittelte Vektoren v^{(Lg)} zugeführt, wobei anhand einer Verknüpfungseinheit 7.1 eine Verknüpfung und Linearisierung von mittels der Self-Attention-Heads SAL₁ bis SALₕ ausgegebenen Ergebnissen durchgeführt wird und somit als latente Encodings ausgebildete Merkmale a1 bis an, welche auf Basis der Interaktionsgrade I1 bis Im aktualisiert wurden und zum Training verwendet werden, bestimmt werden. Die Merkmale a1 bis an werden dann zu einer Trajektorie T decodiert, um das implizite Lernen der Interaktionsgrade I1 bis Im zu ermöglichen. Das heißt, in dem Interaktionsmodul 7 werden paarweise Abhängigkeiten und/oder Gewichte zwischen den Fahrzeugen F1 bis Fn in einer Szene und somit Interaktionsgrade I1 bis Im zwischen Agenten, das heißt den Fahrzeugen F1 bis Fn, gelernt. Der jeweilige Interaktionsgrad I1 bis Im wird beispielsweise gemäß Ashish Vaswani et. al: "Attention Is All You Need" (https://arxiv.org/abs/1706.03762) als paarweises Gewicht als Ergebnis einer so genannten Softmax-Funktion gebildet. Die Interaktionsgrade I1 bis Im werden im Anschluss weiterverwendet, um die Merkmale a1 bis an zu bilden. Insbesondere sind die Interaktionsgrade I1 bis Im in einer Matrix M mit der Form nxn hinterlegt.

Mittels eines Output-Decoders 8 wird aus den Interaktionsgraden I1 bis Im mittels so genannten Linear-Residual-Decodern 8.1 bis 8.z die Trajektorienprädiktion TP' für die Fahrzeuge F1 bis Fn generiert, welche jedoch lediglich zum Training des Interaktionsalgorithmus 3 verwendet wird. Bei der Anwendung in dem Trajektorienprädiktionsalgorithmus 5 wird diese Trajektorienprädiktion TP' nicht verwendet, sondern lediglich durch die Attention-Gewichte, das heißt die Interaktionsgrade I1 bis Im, die Fahrzeugvorauswahl A(F1 bis Fn) getroffen. Unter Residualen-Layer werden dabei Layer verstanden, die aus mehreren Neuronen-Schichten bestehen. Im Gegensatz zu herkömmlichen mehrschichtigen Perzeptronen (kurz: MLP) wird bei Residualen-Layern eine so genannte "Skip-Connection" eingeführt. Diese ermöglicht, dass ein Encoding einer ersten Schicht durch eine lineare Operation zum Encoding einer letzten Schicht addiert wird. Während des Trainings wird somit eine lineare Rückpropagierung eines Fehlers ermöglicht. Dies zeigt besonders bei tiefen neuronalen Netzen gute Ergebnisse.

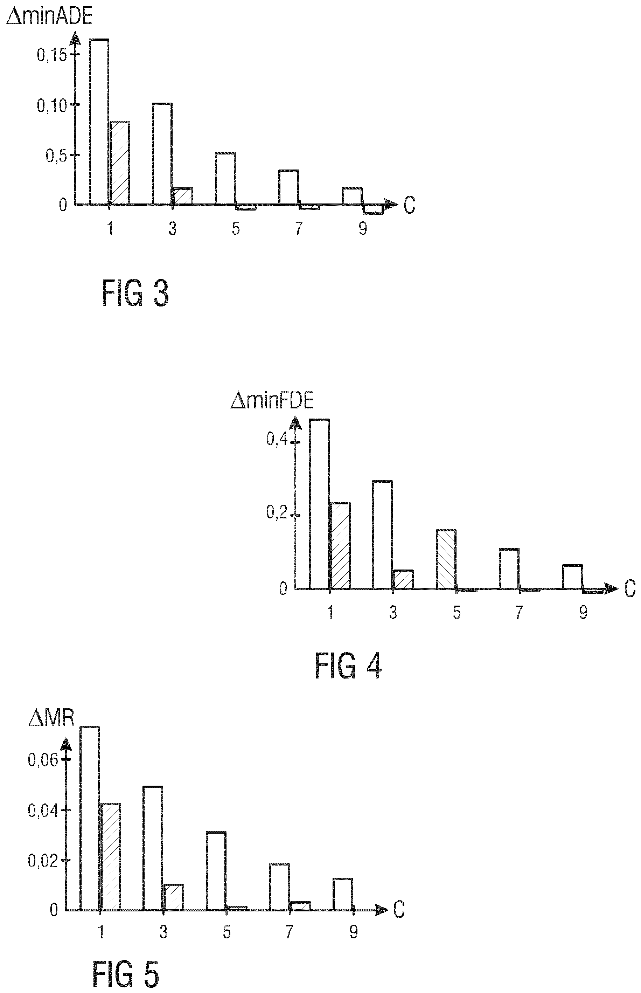

In den Figuren 3 bis 5 sind drei etablierte Metriken dargestellte, welche zur Bestimmung einer Güte von Trajektorienprädiktionen verwendet werden.

Die Metriken umfassen dabei eine in Figur 3 dargestellte Änderung ΔminADE eines minimalen Average Displacement Errors in Abhängigkeit einer fixen Anzahl C von Fahrzeugen F1 bis Fn je Szene für mittels des in den Figuren 1 und 2 beschriebenen Trajektorienprädiktionsalgorithmus 5 auf Basis der Fahrzeugvorauswahl A(F1 bis Fn) ermittelte Trajektorienprädiktionen (schraffiert dargestellte Balken) und für einen Trajektorienprädiktionsalgorithmus, für welchen die Anzahl C an Fahrzeugen F1 bis Fn mittels einer distanzbasierten Methode begrenzt wurde (nicht-schraffiert dargestellte Balken). Der minimale Average Displacement Error gibt dabei an, wie weit jede berechnete Position der jeweiligen Trajektorie T von ihrer wahren Position im Mittels entfernt ist.

Die Metriken umfassen weiterhin eine in Figur 4 dargestellte Änderung ΔminFDE eines minimalen Final Displacement Errors in Abhängigkeit der fixen Anzahl C von Fahrzeugen F1 bis Fn je Szene für mittels des in den Figuren 1 und 2 beschriebenen Trajektorienprädiktionsalgorithmus 5 auf Basis der Fahrzeugvorauswahl A(F1 bis Fn) ermittelte Trajektorienprädiktionen (schraffiert dargestellte Balken) und für den Trajektorienprädiktionsalgorithmus, für welchen die Anzahl C an Fahrzeugen F1 bis Fn mittels einer distanzbasierten Methode begrenzt wurde (nicht-schraffiert dargestellte Balken). Der minimale Final Displacement Error gibt dabei eine Abweichung einer Vorhersage von einer wahren Trajektorie T für den jeweils letzten Vorhersageschritt an.

Die Metriken umfassen weiterhin eine in Figur 5 dargestellte Änderung ΔMR einer Fehlerklassifikationsrate in Abhängigkeit der fixen Anzahl C von Fahrzeugen F1 bis Fn je Szene für mittels des in den Figuren 1 und 2 beschriebenen Trajektorienprädiktionsalgorithmus 5 auf Basis der Fahrzeugvorauswahl A(F1 bis Fn) ermittelte Trajektorienprädiktionen (schraffiert dargestellte Balken) und für den Trajektorienprädiktionsalgorithmus, für welchen die Anzahl C an Fahrzeugen F1 bis Fn mittels einer distanzbasierten Methode begrenzt wurde (nicht-schraffiert dargestellte Balken).

Für alle Metriken gilt, dass geringere Werte besser sind.

Für einen bekannten und etablierten finalen Trajektorienprädiktionsalgorithmus 5 wird anhand dieser Metriken verglichen, wie die beschriebene interaktionsbasierte Fahrzeugvorauswahl A (F1 bis Fn) im Vergleich zur distanzbasierten (euklidischen) Auswahl abschneidet.

Ein jeweiliger 0-Wert ist durch ein Ergebnis des finalen Trajektorienprädiktionsalgorithmus 5, welcher auf dem gesamten Datensatz trainiert und getestet ist, gegeben. Es wird lediglich die Abweichung von dieser Basis angegeben. Die Anzahl C bezeichnet hierbei eine fixe Anzahl, auf welche die Fahrzeuge F1 bis Fn in jeder Szene reduziert sind.

Die Metriken zeigen eindeutig, dass anhand der beschriebenen interaktionsbasierten Vorauswahl A(F1 bis Fn) für jeden Wert der Anzahl C bessere Ergebnisse mittels des Trajektorienprädiktionsalgorithmus 5 realisiert werden, als bei Verwendung der distanzbasierten Auswahl. Das heißt, es kann eine Güteverbesserung der finalen Trajektorienprädiktion im Vergleich zu Ansätzen mit distanzbasierter Vorauswahl erreicht werden.

Bei der Änderung ΔminADE des minimalen Average Displacement Errors und der Änderung ΔminFDE des minimalen Final Displacement Errors ergibt sich aufgrund der heruntergesetzten Komplexität bei einer Anzahl C von fünf, sieben und neun Fahrzeugen F1 bis Fn sogar eine Verbesserung einer Leistungsfähigkeit im Vergleich zu einem finalen Trajektorienprädiktionsalgorithmus 5, der auf dem gesamten Datensatz trainiert ist, was an den negativen Werten zu erkennen. Das heißt, es kann eine Güteverbesserung der finalen Trajektorienprädiktion im Vergleich zu Ansätzen ohne Vorauswahl erreicht werden.

Weiterhin kann durch die interaktionsbasierte Vorauswahl A(F1 bis Fn) eine Laufzeit des finalen Trajektorienprädiktionsalgorithmus 5 gegenüber einem, auf der gesamten Szene mit allen Fahrzeugen F1 bis Fn basierenden Trajektorienprädiktionsalgorithmus 5 erzielt werden.

## Patentansprüche

1. Verfahren zum automatisierten Betrieb eines Ego-Fahrzeugs basierend auf einer Trajektorienprädiktion zur Prädiktion von Trajektorien (T) von Fahrzeugen (F1 bis Fn) in einer Umgebung des Ego-Fahrzeugs, wobei die Trajektorienprädiktion mittels einer Vorrichtung (1) zur Trajektorienprädiktion durchgeführt wird,
- in der ein lernbasierter Trajektorienprädiktionsalgorithmus (5) ausgeführt wird und
- in der mittels eines maschinell trainierten aufmerksamkeitsbasierten Interaktionsalgorithmus (3) Interaktionsgrade (I1 bis Im) zwischen den Fahrzeugen (F1 bis Fn) ermittelt werden,
- die Interaktionsgrade (I1 bis Im) als Attention-Gewichte mittels einer Self-Attention (3.1) des aufmerksamkeitsbasierten Interaktionsalgorithmus (3) gebildet werden,
**dadurch gekennzeichnet, dass**
- mittels des Interaktionsalgorithmus (3) einzelne Fahrzeuge (F1 bis Fn) aus der Menge der in der Umgebung des Ego-Fahrzeugs befindlichen Fahrzeuge (F1 bis Fn) als relevant für die Trajektorienprädiktion identifiziert und für diese ausgewählt werden, wenn deren jeweiliger Interaktionsgrad (I1 bis Im) mit zumindest einem der Fahrzeuge (F1 bis Fn), dessen Trajektorie (T) prädiziert werden soll, einen vorgegebenen Grenzwert überschreitet,
- der Trajektorienprädiktionsalgorithmus (5) mit den als relevant für die Trajektorienprädiktion ausgewählten Fahrzeugen (F1 bis Fn) in einem darauffolgenden Lernschritt trainiert wird und
- der Trajektorienprädiktionsalgorithmus (5) die Trajektorienprädiktion für die als relevant für die Trajektorienprädiktion ausgewählten Fahrzeuge (F1 bis Fn) durchführt.

2. Verfahren nach Anspruch 1,
**dadurch gekennzeichnet, dass** die Interaktionsgrade (I1 bis Im) zwischen den Fahrzeugen (F1 bis Fn) paarweise für jeweils zwei Fahrzeuge (F1 bis Fn) ermittelt werden.

3. Verfahren nach Anspruch 1 oder 2,
**dadurch gekennzeichnet, dass** in dem maschinellen Trainieren des Interaktionsalgorithmus (3) paarweise Abhängigkeiten zwischen Fahrzeugen (F1 bis Fn) gelernt werden und zur Bildung von Interaktionsgraden (I1 bis Im) mittels des Interaktionsalgorithmus (3) paarweise gewichtet wird, wie groß eine gegenseitige Beeinflussung der Fahrzeuge (F1 bis Fn) ist.

4. Verfahren nach einem der vorhergehenden Ansprüche,
**dadurch gekennzeichnet, dass** in dem maschinellen Trainieren des Interaktionsalgorithmus (3) eine Trajektorienprädiktion generiert wird, welche zum Training des Interaktionsalgorithmus (3) verwendet wird.

5. Verfahren nach Anspruch 4,
**dadurch gekennzeichnet, dass** die generierte Trajektorienprädiktion in dem maschinellen Trainieren des Interaktionsalgorithmus (3) zum implizierten Lernen der Interaktionsgrade (I1 bis Im) verwendet wird.

6. Verfahren nach einem der vorhergehenden Ansprüche,
**dadurch gekennzeichnet, dass** während eines Betriebs des maschinell trainierten Interaktionsalgorithmus (3) alle Fahrzeuge (F1 bis Fn) in einer Szene mit einem langen Kurzzeitgedächtnis kodiert werden, wobei bei dem Kodieren Knoten (h₁⁰ bis hₙ⁰) eines vollständigen Graphen (G) gebildet werden.

7. Verfahren nach Anspruch 6,
**dadurch gekennzeichnet, dass** die Knoten (h₁⁰ bis hₙ⁰) über Kanten ( e_{1,2}, e_{1,n}, e_{2,1}, e_{2,n}, e_{n,1}, e_{n,2}) miteinander verbunden werden, wobei ein Abstand zwischen den Fahrzeugen (F1 bis Fn) als Kantenmerkmal verwendet wird.

8. Verfahren nach einem der vorhergehenden Ansprüche,
**dadurch gekennzeichnet, dass** mittels des Trajektorienprädiktionsalgorithmus (5) Kartendaten (KD) einer hochaufgelösten digitalen Straßenkarte zur Trajektorienprädiktion verwendet werden.

9. Verfahren nach einem der vorhergehenden Ansprüche,
**dadurch gekennzeichnet, dass**
- die prädizierten Trajektorien (T) in dem automatisierten Betrieb des Ego-Fahrzeugs bei einer automatisierten Quer- und/oder Längssteuerung des Ego-Fahrzeugs berücksichtigt werden.

## Claims

1. Method for the automated operation of an ego vehicle on the basis of trajectory prediction for predicting trajectories (T) of vehicles (F1 to Fn) in an environment of the ego vehicle, the trajectory prediction being carried out by means of a device (1) for trajectory prediction,
- in which a learning-based trajectory prediction algorithm (5) is executed and
- in which interaction levels (I1 to Im) between the vehicles (F1 to Fn) are determined by means of a machine-trained attention-based interaction algorithm (3) and
- the interaction levels (I1 to Im) are formed as attention weights by means of a self-attention (3.1) of the attention-based interaction algorithm (3),
**characterized in that**
- by means of the interaction algorithm (3), individual vehicles (F1 to Fn) from the set of vehicles (F1 to Fn) in the environment of the ego vehicle are identified as relevant for the trajectory prediction and selected for this purpose if their corresponding interaction level (I1 to Im) with at least one of the vehicles (F1 to Fn) of which the trajectory (T) is to be predicted exceeds a specified limit,
- the trajectory prediction algorithm (5) is trained in a subsequent learning step with the vehicles (F1 to Fn) selected as relevant for the trajectory prediction and
- the trajectory prediction algorithm (5) carries out the trajectory prediction for the vehicles (F1 to Fn) selected as relevant for the trajectory prediction.

2. Method according to claim 1,
**characterized in that** the interaction levels (I1 to Im) between the vehicles (F1 to Fn) are determined pairwise for two vehicles (F1 to Fn) in each case.

3. Method according to claim 1 or claim 2,
**characterized in that** in the machine training of the interaction algorithm (3), dependencies between vehicles (F1 to Fn) are learned pairwise and, to form interaction levels (I1 to Im), the degree of mutual influence between the vehicles (F1 to Fn) is weighted pairwise by means of the interaction algorithm (3).

4. Method according to any of the preceding claims,
**characterized in that** in the machine training of the interaction algorithm (3), a trajectory prediction is generated which is used to train the interaction algorithm (3).

5. Method according to claim 4,
**characterized in that** the generated trajectory prediction is used in the machine training of the interaction algorithm (3) for implicit learning of the interaction levels (I1 to Im).

6. Method according to any of the preceding claims,
**characterized in that** during operation of the machine-trained interaction algorithm (3), all vehicles (F1 to Fn) in a scene are encoded with a long short-term memory, with nodes (h₁⁰ to hₙ⁰) of a complete graph (G) being formed during the encoding process.

7. Method according to claim 6,
**characterized in that** the nodes (h₁⁰ to hₙ⁰) are connected to one another via edges (e_{1,2}, e_{1,n}, e_{2,1}, e_{2,n}, e_{n,1}, e_{n,2}), with a distance between the vehicles (F1 to Fn) being used as an edge feature.

8. Method according to any of the preceding claims,
**characterized in that** map data (KD) from a high-resolution digital road map are used by means of the trajectory prediction algorithm (5) for trajectory prediction.

9. Method according to any of the preceding claims,
**characterized in that**
- the predicted trajectories (T) are taken into account in the automated operation of the ego vehicle during automated lateral and/or longitudinal control of the ego vehicle.

## Revendications

1. Procédé de fonctionnement automatisé d'un ego-véhicule basé sur une prédiction de trajectoire pour la prédiction de trajectoires (T) de véhicules (F1 à Fn) dans un environnement de l'ego-véhicule, dans lequel la prédiction de trajectoire est réalisée par le biais d'un dispositif (1) de prédiction de trajectoire,
- dans lequel un algorithme de prédiction de trajectoire (5) basé sur l'apprentissage est exécuté, et
- dans lequel des degrés d'interaction (I1 à Im) entre les véhicules (F1 à Fn) sont déterminés par le biais d'un algorithme d'interaction (3) basé sur l'attention et entraîné par machine,
- les degrés d'interaction (I1 à Im) sont formés comme des poids d'attention par le biais d'une auto-attention (3.1) de l'algorithme d'interaction (3) basé sur l'attention,
**caractérisé en ce que**
- par le biais de l'algorithme d'interaction (3), des véhicules individuels (F1 à Fn) sont identifiés parmi l'ensemble des véhicules (F1 à Fn) se trouvant dans l'environnement de l'ego-véhicule comme étant pertinents pour la prédiction de trajectoire et sont sélectionnés pour celle-ci, si leur degré d'interaction (I1 à Im) respectif avec au moins l'un des véhicules (F1 à Fn) dont la trajectoire (T) doit être prédite dépasse une valeur limite prédéfinie,
- l'algorithme de prédiction de trajectoire (5) est entraîné avec les véhicules (F1 à Fn) sélectionnés comme pertinents pour la prédiction de trajectoire dans une étape d'apprentissage suivante et
- l'algorithme de prédiction de trajectoire (5) réalise la prédiction de trajectoire pour les véhicules (F1 à Fn) sélectionnés comme pertinents pour la prédiction de trajectoire.

2. Procédé selon la revendication 1,
**caractérisé en ce que** les degrés d'interaction (I1 à Im) entre les véhicules (F1 à Fn) sont déterminés par paires pour respectivement deux véhicules (F1 à Fn).

3. Procédé selon la revendication 1 ou 2,
**caractérisé en ce que** dans l'entraînement par machine de l'algorithme d'interaction (3), on apprend des dépendances par paires entre des véhicules (F1 à Fn) et, pour former des degrés d'interaction (I1 à Im), on pondère par paires, par le biais de l'algorithme d'interaction (3), l'importance d'une influence mutuelle des véhicules (F1 à Fn).

4. Procédé selon l'une des revendications précédentes,
**caractérisé en ce que,** dans l'entraînement par machine de l'algorithme d'interaction (3), une prédiction de trajectoire est générée, laquelle est utilisée pour l'entraînement de l'algorithme d'interaction (3).

5. Procédé selon la revendication 4,
**caractérisé en ce que** la prédiction de trajectoire générée est utilisée dans l'entraînement par machine de l'algorithme d'interaction (3) pour l'apprentissage implicite des degrés d'interaction (I1 à Im).

6. Procédé selon l'une des revendications précédentes,
**caractérisé en ce que,** pendant un fonctionnement de l'algorithme d'interaction (3) entraîné par machine, tous les véhicules (F1 à Fn) sont codés dans une scène avec une mémoire à court terme longue, dans lequel, lors du codage, des nœuds (h₁⁰ à hₙ⁰) d'un graphe complet (G) sont formés.

7. Procédé selon la revendication 6,
**caractérisé en ce que** les nœuds (h₁⁰ à hₙ⁰) sont reliés entre eux par des arêtes (e_{1,2}, e_{1,n}, e_{2,1}, e_{2,n}, e_{n,1}, e_{n,2}), dans lequel une distance entre les véhicules (F1 à Fn) est utilisée comme caractéristique d'arête.

8. Procédé selon l'une des revendications précédentes,
**caractérisé en ce que** des données cartographiques (KD) d'une carte routière numérique à haute résolution sont utilisées pour la prédiction de trajectoire par le biais de l'algorithme de prédiction de trajectoire (5).

9. Procédé selon l'une des revendications précédentes,
**caractérisé en ce que**
- les trajectoires (T) prédites sont prises en compte dans le fonctionnement automatisé de l'ego-véhicule lors d'une commande transversale et/ou longitudinale automatisée de l'ego-véhicule.
